## Europäisches Patentamt

(19) **European Patent Office**

**Office européen des brevets**

(11) Publication number: **0 200 339**
**B1**

(12) # EUROPEAN PATENT SPECIFICATION

(45) Date of publication of the patent specification:
**18.07.90**

(51) Int. Cl.⁵: **F16L 37/10**

(21) Application number: **86302102.8**

(22) Date of filing: **21.03.86**

(54) **Pipe couplings.**

(30) Priority: **03.04.85 GB 8508757**
**21.10.85 US 789745**

(43) Date of publication of application:
**10.12.86 Bulletin 86/45**

(45) Publication of the grant of the patent:
**18.07.90 Bulletin 90/29**

(84) Designated Contracting States:
**BE DE FR GB IT NL SE**

(56) References cited:
**US-A- 1 477 440**
**US-A- 2 006 833**
**US-A- 3 390 898**
**US-A- 4 372 586**
**US-A- 4 412 694**

(73) Proprietor: **Robson, Anthony Roy, Windy Ridge Trundle Lane, Fishlake Near Doncaster(GB)**
Proprietor: **Marsden, George Michael, Robin Hill Manor Drive, Cadeby Doncaster, DN5 7SP(GB)**

(72) Inventor: **Robson, Anthony Roy, Windy Ridge Trundle Lane, Fishlake Near Doncaster(GB)**
Inventor: **Marsden, George Michael, Robin Hill Manor Drive, Cadeby Doncaster, DN5 7SP(GB)**

(74) Representative: **Geldard, David Guthrie et al, URQUHART-DYKES AND LORD Tower House Merrion Way, Leeds West Yorkshire LS2 8PA(GB)**

## Description

This invention relates to pipe couplings, more particularly - but not exclusively - for plastics pipes, being of the type having a socket with an inner internal portion for location of an inserted pipe, and an outer internal portion of larger diameter with means for location of a sealing ring acting between the socket and the inserted pipe, and a gripping ring also located in the outer internal portion of the socket and adapted to prevent withdrawal of the inserted pipe from the socket.

It is known for the gripping ring to be a radially compressible ring, with the radial compression effected by co-operating frustoconical surfaces on the ring and inside the socket and/or inside a nut screwing on to the socket and having an inwardly directed flange for urging the gripping ring axially into the socket. The disadvantage of this is that it is not possible to know and difficult to judge how much to tighten the nut to obtain a sufficient grip on the inserted pipe without risk of damage.

It is also known for the gripping ring to be a grab ring having deflectable teeth for effecting an automatic grip on a pipe inserted through it, but in addition to the disadvantages of not knowing whether the grip is adequate, whether it will be maintained, and whether the inserted pipe has been damaged, it is necessary for the grab ring to be disposed farther than the sealing ring in the socket so that the latter can seal on a portion of the surface of the inserted pipe not scarred by the teeth of the grab ring. Furthermore, because the pipe cannot be inserted into the socket without the grip being effected automatically it is not possible to effect a trial of the coupling without then having to dismantle its constituent parts.

It is known from US-A 4 372 586 to provide a pipe coupling which comprises a socket with an inner internal socket portion for location of an inserted pipe. and an outer internal portion of larger diameter with means for location of a sealing ring acting between the socket and the inserted pipe. Also, there is disclosed a gripping ring located in the outer socket portion and adapted to prevent withdrawal of the inserted pipe from the socket, the ring having an internal diameter not less than that of the inner socket portion. An encircling member is rotatably mounted on the socket for movement between an operative and an inoperative position, and is engageable with the gripping rings so that. upon rotation of the encircling member to the operative position, it causes the gripping ring to grip the outer periphery of the inserted pipe.

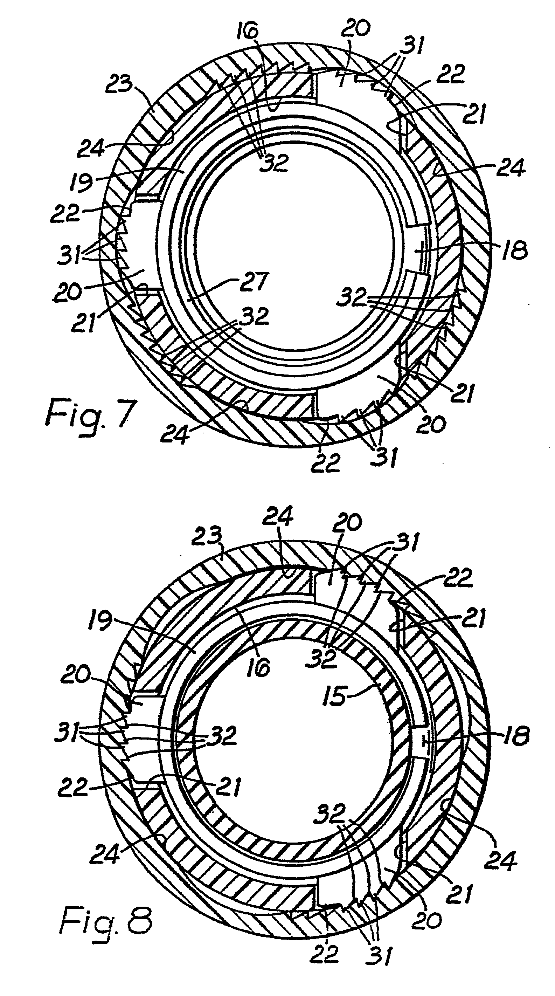

In one embodiment of this known pipe coupling, as shown in Figures 6 to 10, the gripping ring has an annular shoulder which engages the outer periphery of the inserted pipe, but this shoulder is eccentric with respect to the axis of the ring. The ring is therefore substantially rigid. and relies upon this eccentricity in order to engage with the outer periphery of the inserted pipe.

By contrast, the invention relies upon the use of a resiliently deformable gripping ring to engage with the outer periphery of the inserted pipe.

According to the invention there is provided a pipe coupling comprising:
a socket with an inner internal socket portion for location of an inserted pipe, and an outer internal portion of larger diameter with means for location of a sealing ring acting between the socket and the inserted pipe; a gripping ring located in the outer socket portion and adapted to prevent withdrawal of the inserted pipe from the socket, the ring having an internal diameter not less than that of the inner socket portion; and an encircling member rotatably mounted on the socket for movement between an operative position and an inoperative position, said member being engageable with the gripping ring so that, upon rotation of the encircling member to the operative position, it causes the gripping ring to grip the outer periphery of the inserted pipe:
characterised in that the gripping ring is arranged to be radially inwardly deformable, and is provided with a plurality of integral projections which engage with recesses in the outer socket portion so as to hold the gripping ring captive against rotation relative to the socket:
and in that camming portions are provided on the interior of the encircling member and the radially outer ends of the projections and which are interengageable, as the encircling member rotates to its operative position, in order to apply radial inward deformation to the gripping ring so that the latter can engage and grip with the outer periphery of the inserted pipe.

Rotation of the encircling member from the operative position to the inoperative position e.g. by reverse rotation or further rotation of the encircling member, causes the respective camming portions to disengage, thereby removing the radial pressure on the gripping ring and releasing the grip of the gripping ring on the inserted pipe, which can then be withdrawn from the coupling and replaced again or replaced by another pipe, and gripping engagement effected therewith by this same gripping ring upon rotation of the encircling member again.

The recesses in the outer socket portion may be formed as slots or as notches in its outer end, and in the latter case the encircling member is formed as a sleeve rotatable on the socket, with at one end of the sleeve an inward flange overlying the outer end of the outer socket portion and with an inner diameter not less than that of the inner socket portion, and with at the other end of the sleeve turned tabs (if the sleeve is of metal) or an inward rib (if of plastics material) engaged in a groove in the outside of the socket, while in the former case (i.e., radial slots) the encircling member may alternatively be a ring rotatable in a groove (e.g., between ribs) round the outside of the outer socket portion.

The gripping force applied by the gripping ring to the inserted pipe can be varied to suit any internal pressure by varying the interference between the camming portions on the gripping ring projections and those inside the encircling member. The camming portions of the projections on the gripping ring and the inside of the sleeve or cap may be provided with interengaging teeth to prevent reverse rotation of the encircling member on the socket, but the inserted pipe may be released by further rotation of the encircling member to disengage the camming portions on the gripping ring projections from those inside the encircling member. Alternatively, or in addition, the encircling member and the outside of the socket may be provided with radial stop members cooperating to limit the extent of rotation to that required to bring the respective camming portions into engagement or, by reverse rotation, out of engagement.

The gripping ring may be a continuous ring of plastics material, or - conveniently - it may be a split ring of metal or (preferably) plastics material, and is preferably provided with three projections - but more could be provided. The gripping ring may be provided with internal teeth or serrations to assist in gripping a plastics pipe or (more particularly) a metal pipe.

The sealing ring may be an 0-ring.

The socket may be formed on one end of a length of pipe (e.g. a plastics pipe), with the inner socket portions formed as a first enlargement from the bore of the pipe; or it may be one end of a coupling sleeve the other end of which is a similar socket, with the respective inner socket portions separated by an internal annular flange; or, again, it may be one end of a branch fitting having similar sockets on its other end and its branch or branches; or it may be integral with a tap or a tank or cistern.

An embodiment of the invention, and modifications thereof, will now be described, by way of example only, with reference to the accompanying drawings, in which:-

Figure 1 is a small scale exploded perspective view showing the parts of a pipe coupling in accordance with the invention, provided at one end of a coupling sleeve the other end of which has a similar pipe coupling;

Figure 2 is a part sectional side elevation of the coupling sleeve of Figure 1, to a larger scale and showing the pipe coupling assembled and ready to receive a pipe;

Figures 3 and 4 are sections on the lines III - III and IV - IV respectively of Figure 2;

Figures 5 and 6 correspond to Figures 2 and 3 but show the coupling after insertion and gripping of a pipe;

Figures 7 amd 8 correspond to Figures 3 and 6, but show modifications of the camming portions for effecting gripping of the inserted pipe; and

Figures 9 and 10 correspond to Figure 2, but show modifications in the formation of the socket and the encircling member.

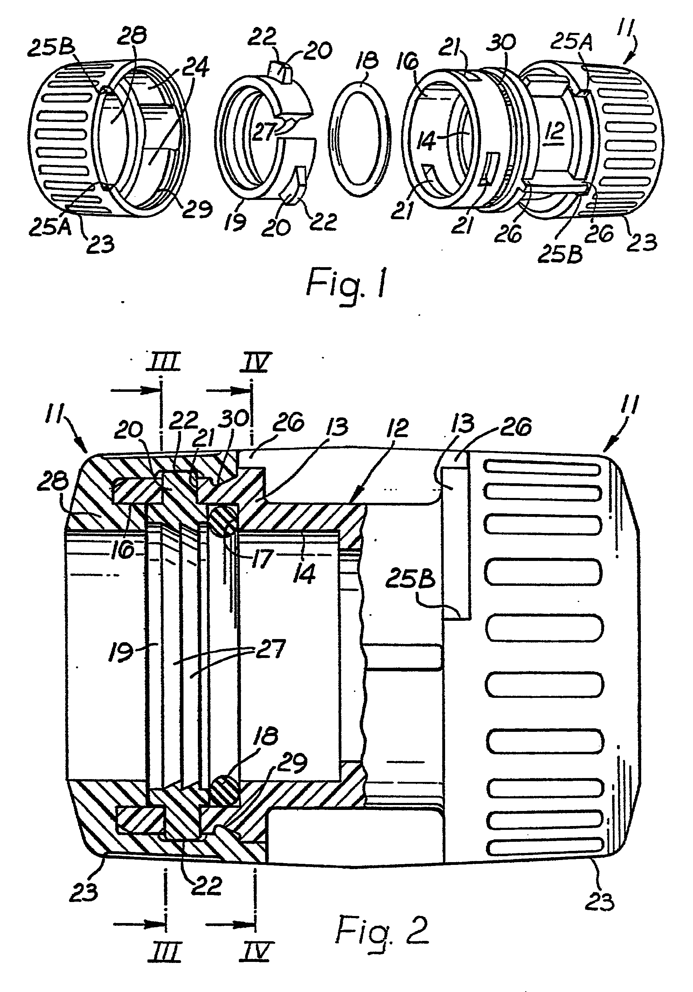

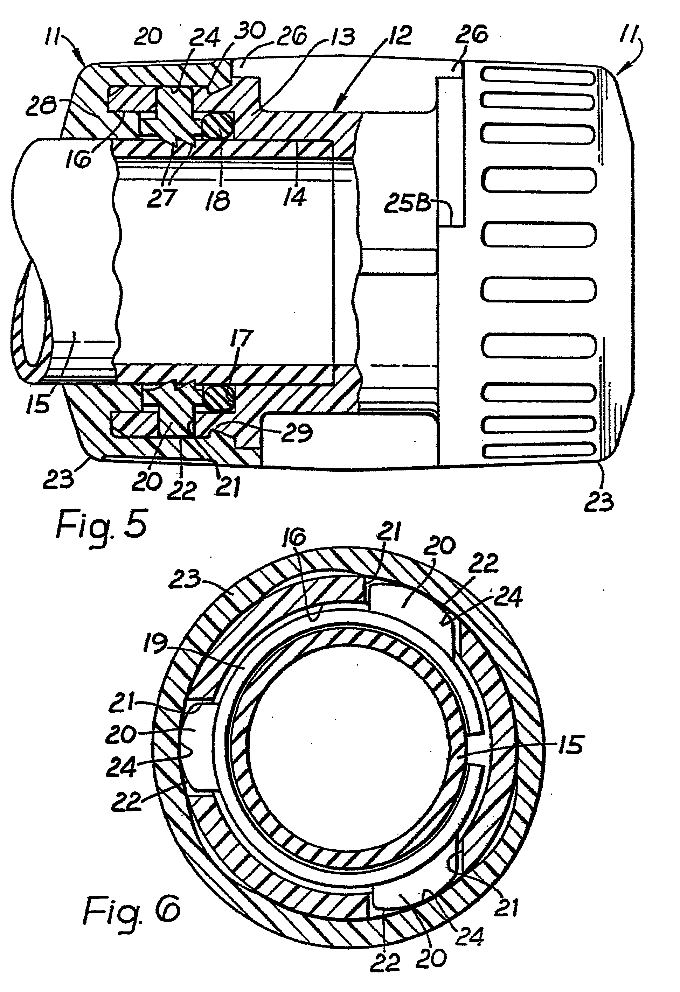

Referring to Figures 1 to 4, a pipe coupling 11 (on the end of a coupling sleeve 12 the other end of which has a similar pipe coupling) has a socket 13 with an inner internal portion 14 for location of an inserted pipe 15 (see Figures 5 and 6), and an outer internal portion 16 with means (a shoulder) 17 for location of a sealing ring (an 0-ring) 18 acting between the socket and the inserted pipe, and a gripping ring 19 also located in the outer internal portion 16 of the socket and adapted (as will now be described) to prevent withdrawal of the inserted pipe from the socket.

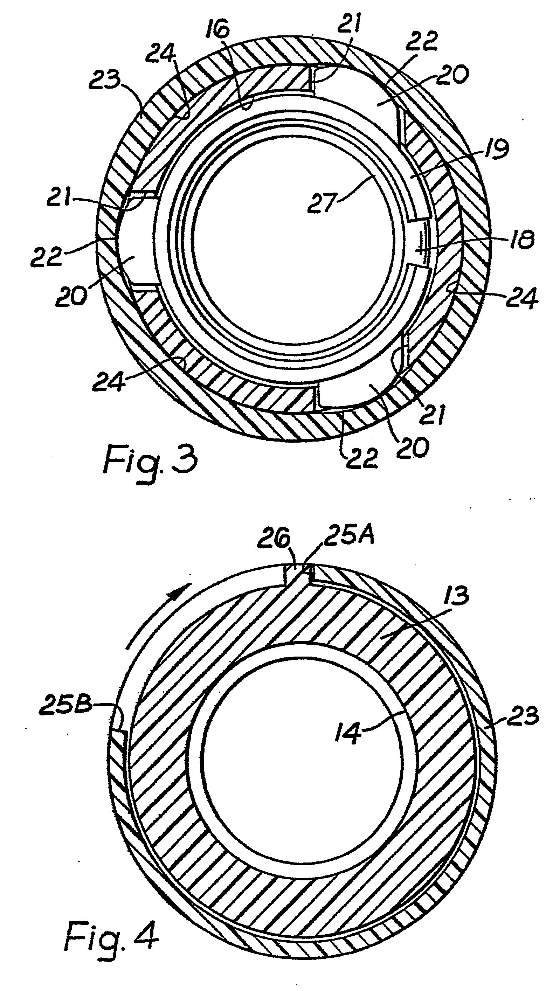

In accordance with the invention, the gripping ring 19 is formed with an internal diameter not less than that of the inner socket portion 14 and with a plurality (three) integral projections 20 extending into corresponding apertures 21 (formed as slots) in the outer socket portions 16 and having camming portions 22 projecting from the radially outer ends of the apertures, the outside of the socket being provided with an encircling member 23 rotatable on the socket 13 and having an internal profile with corresponding camming portions 24 for predetermined interference with the camming portions 22 of the gripping ring projections 20 upon rotation of the encircling member from an initial position (Figures 2 and 3) in which the respective camming portions 22, 24 are out of engagement, to a subsequent position (Figures 5 and 6) in which the respective camming portions are in engagement, to apply predetermined radial pressure through the projections 20 on to the gripping ring 19 to cause it to contract into gripping engagement with the inserted pipe 15.

The encircling member 23 and the outside of the socket 13 are provided with radial stop members 25A, 25B and 26 cooperating to limit the extent of rotation to that required to bring the respective camming portions 22, 24 into engagement, and, by reverse rotation, out of engagement to release the grip of the gripping ring on the inserted pipe, which can then be withdrawn from the coupling 11 and replaced again or replaced by another pipe, and gripping engagement effected therewith by the same gripping member 19 upon rotation of the encircling member again.

The gripping ring 19 is a split ring of plastics material, and is provided with internal teeth 27 to assist in gripping a plastics pipe 15.

The coupling sleeve 12 is formed of plastics material, as is also the encircling member 23, which is formed as a sleeve rotatable on the socket 13, with at one end of the sleeve an inward flange 28 overlying and entering the outer end of the outer socket portion 16 and with an inner diameter not less than that of the inner socket portion 14, and with at the other end of the sleeve an inward rib 29 engaged in a groove 30 in the outside of the socket.

In Figures 7 and 8, the camming portions 22, 24 are provided with interengaging teeth 31, 32 respectively to prevent reverse rotation of the encircling member 23 on the socket 13.

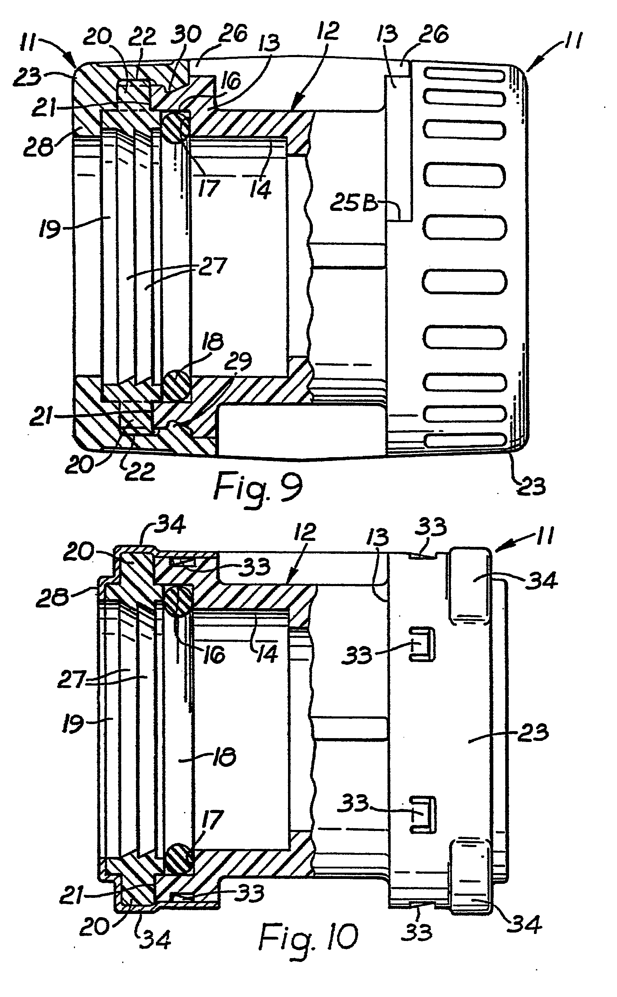

In Figure 9 the apertures 21 are formed as notches in the outer end of the outer socket portion 16, in which notches the projections 20 on the gripping ring 19 are retained by the inward flange 28 of the encircling member 23.

In Figure 10 the encircling member 23 is formed of metal with an inward flange 28 at one end and with inturned tabs 33 at the other engaging in a groove 30 in the outside of the socket 13. The encircling member is formed with bulges 34 between which lie the internal camming portions 24 (not visible).

## Claims

1. A pipe coupling comprising:
a socket (13) with an inner internal socket portion (14) for location of an inserted pipe (15), and an outer internal portion (16) of larger diameter with means for location of a sealing ring (18) acting between the socket (13) and the inserted pipe; a gripping ring (19) located in the outer socket portion (16) and adapted to prevent withdrawal of the inserted pipe (15) from the socket (13), the ring (19) having an internal diameter not less than that of the inner socket portion (14); and an encircling member (23) rotatably mounted on the socket (13) for movement between an operative position and an inoperative position, said member (23) being engageable with the gripping ring (19) so that, upon rotation of the encircling member (23) to the operative position, it causes the gripping ring (19) to grip the outer periphery of the inserted pipe:
characterised in that the gripping ring (19) is arranged to be radially inwardly deformable, and is provided with a plurality of integral projections (20) which engage with recesses (21) in the outer socket portion (16) so as to hold the gripping ring (19) captive against rotation relative to the socket;
and in that camming portions (22, 24) are provided on the interior of the encircling member and the radially outer ends of the projections and which are interengageable, as the encircling member (23) rotates to its operative position, in order to apply radial inward deformation to the gripping ring (19) so that the latter can engage and grip with the outer periphery of the inserted pipe (15).

2. A pipe coupling according to Claim 1, characterised in that the recesses in the outer socket portion (16) comprise slots through which the projections (20) extend.

3. A pipe coupling according to Claim 1, characterised in that the recesses in the outer socket portion (16) are formed as notches (21) in its outer end, and the encircling member (23) is formed as a sleeve rotatable on the socket, with at one end of the sleeve an inward flange (28) overlying the outer end of the outer socket portion (16) and with an inner diameter not less than that of the inner socket portion (14).

4. A pipe coupling according to Claim 3. characterised in that the sleeve is formed of metal and the other end of the sleeve is provided with inturned tabs (33) engaged in a groove in the outside of the socket (13).

5. A pipe coupling according to Claim 3, characterized in that the sleeve is formed of plastics material and the other end of the sleeve is provided with an inward rib (29) engaged in a groove (30) in the outside of the socket (13).

6. A pipe coupling according to Claim 1 or 2. characterised in that the camming portions (22, 24) on the interior of the encircling member (23) and on the outer ends of the projections (20) are provided with interengaging teeth (31, 32) to prevent reverse rotation of the encircling member (23) on the socket (13).

7. A pipe coupling according to Claim 1, characterised in that the encircling member (23) and the outside of the socket (13) are provided with radial stop members (25A, 25B, 26) co-operating to limit the extent of rotation of the encircling member (23) to that required to bring the respective camming portions (22, 24) into and out of engagement.

8. A pipe coupling according to Claim 1, characterised in that the gripping ring (19) is a split ring.

9. A pipe coupling according to Claim 8, characterised in that the split gripping ring (19) is formed of plastics material.

10. A pipe coupling according to Claim 1, characterised in that the gripping ring (19) is provided with three radial projections (20).

11. A pipe coupling according to Claim 1, characterised in that the gripping ring (19) is provided with internal teeth (27) to assist in gripping the outer periphery of an inserted pipe.

## Patentansprüche

1. Rohrverbindung mit einer Rohrmuffe (13), die einen inneren Innen-Muffenteil (14) zur Festlegung eines eingeführten Rohres (15) und einen äußeren Innenteil (16) größeren Durchmessers mit einer Einrichtung zur Festlegung eines Dichtungsrings (18) aufweist, der zwischen der Rohrmuffe (13) und dem eingeführten Rohr wirkt, mit einem Greifring (19), der in dem äußeren Muffenteil (16) festgelegt ist und der das Zurückziehen des eingeführten Rohres (15) aus der Rohrmuffe (14) zu verhindern imstande ist,
wobei der Ring (19) einen Innendurchmesser aufweist, der nicht geringer ist als jener des inneren Muffenteiles (14), und mit einem Umschließungsteil (23), welches an der Rohrmuffe (13) zur Bewegung zwischen einer Betriebsstellung und einer Nichtbetriebsstellung drehbar angeordnet ist, wobei das betreffende Umschließungsteil (23) mit dem Greifring (19) derart in Anlage bringbar ist, daß auf eine Drehung des betreffenden Umschließungsteiles (23) in die Betriebsstellung hin der Greifring (19) veranlaßt wird, den äußeren Umfang des eingeführten Rohres zu erfassen, dadurch gekennzeichnet,
daß der Greifring (19) so angeordnet ist, daß er radial nach innen verformbar ist,
daß der betreffende Greifring (19) mit einer Vielzahl von integralen Vorsprüngen (20) versehen ist, die in Ausnehmungen (21) innerhalb des äußeren Muffenteiles (16) derart eingreifen, daß der Greifring (19) entgegen einer Drehung in bezug auf die Rohrmuffe festgehalten wird,
und daß Nockenteile (22, 24) am Innern des Umschließungsteiles und an den radial äußeren Enden der Vorsprünge vorgesehen und miteinander in Eingriff bringbar sind, wenn das Umschließungsteil (23) sich in seine Betriebsstellung dreht, um eine Verformung des Greifringes (19) radial nach innen derart auszuüben, daß dieser am Außenumfang des eingesetzten Rohres (15) anliegen und diese erfassen kann.

2. Rohrverbindung nach Anspruch 1, dadurch gekennzeichnet, daß die Ausnehmungen in dem äußeren Muffenteil (16) Schlitze umfassen, durch die sich die Vorsprünge (20) erstrecken.

3. Rohrverbindung nach Anspruch 1, dadurch gekennzeichnet, daß die Ausnehmungen in dem äußeren Muffenteil (16) als Nute (21) in dessen äußeren Ende gebildet sind

und daß das Umschließungsteil (23) als eine Hülse gebildet ist, die auf der Muffe drehbar ist,

wobei an einem Ende der betreffenden Hülse ein nach innen verlaufender Flansch (28) vorgesehen ist, der über dem äußeren Ende des äußeren Muffenteiles (16) liegt,

und wobei die Hülse einen Innendurchmesser aufweist, der nicht geringer ist als der des inneren Muffenteiles (14).

4. Rohrverbindung nach Anspruch 3, dadurch gekennzeichnet, daß die Hülse aus Metall gebildet ist und daß das andere Ende der Hülse mit nach innen gewandten Nasen (33) versehen ist, die in eine Nut auf der Außenseite der Muffe (13) eingreifen.

5. Rohrverbindung nach Anspruch 3, dadurch gekennzeichnet, daß die Hülse aus Kunststoff besteht und daß das andere Ende der Hülse mit einer Innen-Rippe (29) versehen ist, die in eine Nut (30) auf der Außenseite der Muffe (13) eingreift.

6. Rohrverbindung nach Anspruch 1 oder 2, dadurch gekennzeichnet, daß die Nockenteile (22, 24) im Innern des Umschließungsteiles (23) und an den äußeren Enden der Vorsprünge (20) mit miteinander in Eingriff befindlichen Zähnen (31, 32) versehen sind, um eine Zurückdrehung des Umschließungsteiles (23) auf der Muffe (13) zu verhindern.

7. Rohrverbindung nach Anspruch 1, dadurch gekennzeichnet, daß das Umschließungsteil (23) und die Außenseite der Muffe (13) mit radialen Stoppgliedern (25A, 25B, 26) versehen sind, die derart miteinander zusammenwirken, daß das Ausmaß der Drehung des Umschließungsteiles (23) zu der Drehung begrenzt ist, die erforderlich ist, um die entsprechenden Nockenteile (22, 24) in und außer Eingriff zu bringen.

8. Rohrverbindung nach Anspruch 1, dadurch gekennzeichnet, daß der Greifring (19) ein geteilter Ring ist.

9. Rohrverbindung nach Anspruch 8, dadurch gekennzeichnet, daß der geteilte Greifring (19) aus Kunststoff gebildet ist.

10. Rohrverbindung nach Anspruch 1, dadurch gekennzeichnet, daß der Greifring (19) mit drei radialen Vorsprüngen (20) versehen ist.

11. Rohrverbindung nach Anspruch 1, dadurch gekennzeichnet, daß der Greifring (19) mit Innen-Zähnen (27) versehen ist, um das Eingreifen in den äußeren Umfang eines eingeführten Rohres zu unterstützen.

**Revendications**

1. Raccord pour tuyau, comprenant une tulipe (13) qui comporte une partie interne intérieure de tulipe (14) pour le positionnement d'un tuyau (15) introduit, et une partie interne extérieure (16) de plus grand diamètre munie de moyens pour le positionnement d'une bague d'étanchéité (18) agissant entre la tulipe (13) et le tuyau introduit ; une bague de serrage (19) disposée dans la partie extérieure de tulipe (16) et adaptée pour empêcher l'extraction du tuyau introduit (15) hors de la tulipe (13), cette bague (19) ayant un diamètre intérieur non inférieur à celui de la partie intérieure de tulipe (14) ; et un organe de ceinture (23) monté rotatif sur la tulipe (13) de façon à pouvoir se déplacer entre une position active et une position inactive, ledit organe (23) pouvant venir en prise avec la bague de serrage (19) de telle façon que lorsque l'organe de ceinture est amené par rotation à la position active, il provoque le serrage de la périphérie extérieure du tuyau introduit par la bague de serrage (19);

caractérisé en ce que la bague de serrage (19) est agencée de manière à pouvoir être déformée radialement vers l'intérieur, et est pourvue d'une série de saillies (20) venues de matière qui coopèrent avec des évidements (21) de la partie extérieure de tulipe (16) de manière à empêcher la bague de serrage (19) de tourner par rapport à la tulipe;

et en ce que des régions formant cames (22, 24) sont prévues sur l'intérieur de l'organe de ceinture et sur les extrémités radialement extérieures des saillies et peuvent venir en prise mutuelle, lorsque l'organe de ceinture (23) tourne jusqu'à sa position active, afin d'appliquer une déformation radiale vers l'intérieur à la bague de serrage (19) de façon que cette dernière puisse venir en prise avec la périphérie extérieure du tuyau introduit (15) et la serrer.

2. Raccord pour tuyau suivant la revendication 1, caractérisé en ce que les évidements de la partie extérieure de tulipe (16) comprennent des fentes traversées par les saillies (20).

3. Raccord pour tuyau suivant la revendication 1, caractérisé en ce que les évidements de la partie extérieure de tulipe (16) sont réalisés sous la forme d'encoches (21) ménagées dans son extrémité extérieure, et en ce que l'organe de ceinture (23) est réalisé sous la forme d'un manchon monté rotatif sur la tulipe, avec à une extrémité du manchon une collerette intérieure (28) qui recouvre l'extrémité extérieure de la partie extérieure de tulipe (16) et dont le diamètre intérieur n'est pas inférieur à celui de la partie intérieure de tulipe (14).

4. Raccord pour tuyau suivant la revendication 3, caractérisé en ce que le manchon est en métal et en ce que l'autre extrémité du manchon est pourvue de languettes (33) rabattues vers l'intérieur qui sont en prise dans une gorge ménagée dans l'extérieur de la tulipe (13).

5. Raccord pour tuyau suivant la revendication 3, caractérisé en ce que le manchon est en matière plastique et en ce que l'autre extrémité du manchon est pourvue d'une nervure intérieure (29) en prise dans une gorge (30) ménagée dans l'extérieur de la tulipe (13).

6. Raccord pour tuyau suivant la revendication 1 ou 2, caractérisé en ce que les régions formant cames (22, 24) prévues sur l'intérieur de l'organe de ceinture (23) et sur les extrémités extérieures des saillies (20) sont pourvues de dents venant en prise mutuelle (31, 32) pour empêcher la rotation en sens inverse de l'organe de ceinture (23) sur la tulipe (13).

7. Raccord pour tuyau suivant la revendication 1, caractérisé en ce que l'organe de ceinture (23) et l'extérieur de la tulipe (13) sont pourvus d'organes d'arrêt radiaux (25A, 25B, 26) qui coopèrent pour limiter l'amplitude de la rotation de l'organe de ceinture (23) à celle nécessaire pour amener les régions formant cames respectives (22, 24) en prise et les dégager les unes des autres.

8. Raccord pour tuyau suivant la revendication 1, caractérisé en ce que la bague de serrage (19) est une bague fendue.

9. Raccord pour tuyau suivant la revendication 8, caractérisé en ce que la bague de serrage fendue (19) est en matière plastique.

10. Raccord pour tuyau suivant la revendication 1, caractérisé en ce que la bague de serrage (19) est pourvue de trois saillies radiales (20).

11. Raccord pour tuyau suivant la revendication 1, caractérisé en ce que la bague de serrage (19) est pourvue de dents internes (27) pour aider le serrage de la périphérie extérieure d'un tuyau introduit.

Fig. 1

Fig. 2

Fig. 3

Fig. 4

Fig. 5

Fig. 6

Fig. 7

Fig. 8

Fig. 9

Fig. 10